# EUROPEAN PATENT APPLICATION

(11) **EP 4 738 783 A1**
(43) Date of publication of application: **06.05.2026**
(21) Application number: 25201460.0
(22) Date of filing: 10.09.2025
(51) Int. Cl.: H04L 45/02, H04L 45/741

(54) **BORDER GATEWAY PROTOCOL SESSION MANAGEMENT**

(30) Priority: 31.10.2024 US 202418933767
(71) Applicant: Cisco Technology, Inc., San Jose, CA 95134 (US)
(72) Inventor: ANANTHAMURTHY, Krishnaswamy, Leander, TX (US); KUMAR, Nitin, San Jose, CA (US); MOHANTY, Satya R., San Ramon, CA (US); KRATTIGER, Lukas, Pleasanton, CA (US); MISHRA, Mankamana Prasad, San Jose, CA (US)
(74) Representative: Mathys & Squire

(57) **Abstract**

Devices and methods are provided for exchanging route type capabilities between peer network devices, for example, Border Gateway Protocol (BGP) speakers, to prevent a BGP session reset when a particular route type is not supported by one of the peer network devices. A network device, that supports a set of route types, receives an announcing message indicating a route type capability of a peer network device. The network device selects a subset of route types supported by the peer network device from the set of route types based on the route type capability of the peer network device. The network device transmits an update message that advertises the subset of route types to the peer network device. Thus, a route type supported by the network device is not included in the update message if the route type is not advertised in the announcing message by the peer network device.

## Description

The present disclosure relates to network session management. More particularly, the present disclosure relates to an exchange of route type capabilities between peer network devices for Border Gateway Protocol (BGP) session management.

### BACKGROUND

Border Gateway Protocol (BGP) has become a popular routing protocol among leading operators and service providers. BGP, as an exterior gateway protocol (EGP), facilitates the exchange of routing information among network devices (for example, routers) across different autonomous systems and networks. A network device that executes a BGP process is commonly referred to as a BGP speaker.

To initiate communication and exchange routing information, BGP speakers establish a transport control protocol (TCP) connection. This connection may form a basis for a BGP session. A BGP session may refer to a logical connection and communication channel established between two BGP speakers or BGP peers. Through the BGP session, the BGP speakers exchange routing information including, for example, network layer reachability information (NLRI) attribute, and make informed routing decisions across different autonomous systems. The routing information transmitted by a BGP speaker may include complete routing details for each network destination reachable from the BGP speaker. In an example, the routing information can include an address prefix of a destination location and attributes that describe a path to a destination host. Once a BGP session is set up, updates to the routing information may be exchanged or advertised between the BGP speakers for the remainder of the BGP session. For example, the BGP speakers may continue to exchange BGP messages including updates (e.g., prefixes, path attributes, routing policies, or the like) about reachable networks.

Within the context of BGP, various address families have emerged to cater to specific networking needs. Examples of these address families may include Ethernet Virtual Private Network (EVPN), Multicast VPN (MVPN), or the like. These address families exhibit a capability to support multiple route types and such capability is advertised within a Multiprotocol Reachable NLRI (MP_REACH_NLRI) attribute. The MP_REACH_NLRI attribute may be utilized in the BGP to carry routing information for multiple network layer protocols. Different route types have different key lengths and include multiple fields, which are utilized as a BGP route key. If a BGP speaker encounters a particular route type that it does not support, the BGP session is reset as the BGP speaker may be unable to interpret the BGP route key from the MP_REACH_NLRI. However, resetting a BGP session is expensive, and may impact a network adversely.

### SUMMARY OF THE DISCLOSURE

Aspects of the invention are set out in the independent claims and preferred features are set out in the dependent claims. Features of one aspect may be applied to each aspect alone or in combination with other features.

Devices and methods for exchanging route type capabilities between peer network devices for Border Gateway Protocol (BGP) session management in accordance with embodiments of the disclosure are described herein.

In many embodiments, a network device comprises a processor and a memory communicatively coupled to the processor. The memory comprises a session logic that is configured to receive an announcing message configured to indicate a route type capability of a peer network device. The network device supports a set of route types. The session logic is further configured to select, based on the route type capability of the peer network device, a subset of route types from the set of route types and transmit an update message configured to advertise the subset of route types to the peer network device. The subset of route types is supported by the peer network device.

In a number of embodiments, the session logic is further configured to transmit another announcing message configured to indicate a route type capability of the network device to the peer network device.

In a variety of embodiments, the session logic is further configured to transmit the another announcing message prior to transmitting the update message.

In several embodiments, a Border Gateway Protocol session is established between the network device and the peer network device based on the announcing message.

In numerous embodiments, the session logic is further configured to transmit the update message during the Border Gateway Protocol session.

In more embodiments, the route type capability indicates one or more route types supported by the peer network device.

In various embodiments, the announcing message corresponds to a Border Gateway Protocol OPEN message.

In further embodiments, the Border Gateway Protocol OPEN message includes an optional parameters field that is configured to indicate the route type capability.

In yet more embodiments, the update message corresponds to a Border Gateway Protocol UPDATE message.

In still more embodiments, the Border Gateway Protocol UPDATE message includes a network layer reachability information field that is configured to advertise the subset of route types.

In still yet more embodiments, the route type capability is associated with at least one of an Address Family Indicator (AFI) or a Subsequent AFI (SAFI).

In further additional embodiments, the announcing message is further configured to indicate at least one of the AFI or the SAFI.

In still further embodiments, the route type capability is associated with a unique identifier code.

In yet further embodiments, the announcing message is further configured to indicate the unique identifier code.

In numerous additional embodiments, a network device comprises a processor and a memory communicatively coupled to the processor. The memory comprises a session logic that is configured to transmit an announcing message configured to indicate a route type capability of the network device to a peer network device. The peer network device supports a set of route types. The session logic is further configured to receive, in response to the announcing message, an update message from the peer network device. The update message is configured to advertise a subset of route types selected from the set of route types based on the route type capability and the subset of route types is supported by the network device.

In still yet further embodiments, the session logic is further configured to receive another announcing message that indicates a route type capability of the peer network device.

In many further embodiments, the network device and the peer network device are acting as Border Gateway Protocol speakers.

In many additional embodiments, the session logic is further configured to determine an update in the route type capability.

In many more embodiments, the session logic is further configured to transmit a new announcing message configured to indicate the updated route type capability to the peer network device.

In several more embodiments, a method comprises receiving an announcing message configured to indicate a route type capability of a peer network device. A network device supports a set of route types. The method further comprises selecting, based on the route type capability of the peer network device, a subset of route types from the set of route types. The subset of route types is supported by the peer network device. The method further comprises transmitting an update message configured to advertise the subset of route types to the peer network device.

Other objects, advantages, novel features, and further scope of applicability of the present disclosure will be set forth in part in the detailed description to follow, and in part will become apparent to those skilled in the art upon examination of the following or may be learned by practice of the disclosure. Although the description above contains many specificities, these should not be construed as limiting the scope of the disclosure but as merely providing illustrations of some of the presently preferred embodiments of the disclosure. As such, various other embodiments are possible within its scope. Accordingly, the scope of the disclosure should be determined not by the embodiments illustrated, but by the appended claims and their equivalents.

### BRIEF DESCRIPTION OF DRAWINGS

The above, and other, aspects, features, and advantages of several embodiments of the present disclosure will be more apparent from the following description as presented in conjunction with the following several figures of the drawings.
FIG. 1 is a schematic block diagram of a network system including a plurality of network devices supporting different route types in accordance with various embodiments of the disclosure;
FIG. 2 is a schematic message flow diagram for managing a Border Gateway Protocol (BGP) session between network devices in accordance with various embodiments of the disclosure;
FIG. 3 is a conceptual schematic diagram of an example BGP OPEN message indicating a route type capability of a network device in accordance with various embodiments of the disclosure;
FIG. 4 is a conceptual schematic diagram of an example BGP UPDATE message for advertising a subset of route types to a network device in accordance with various embodiments of the disclosure;
FIG. 5 is a flowchart depicting a process for exchanging route type capabilities between network devices from the perspective of a transmitting network device to prevent a reset of a BGP session in accordance with various embodiments of the disclosure;
FIG. 6 is a flowchart depicting a process for exchanging route type capabilities between network devices from the perspective of a receiving network device to prevent a reset of a BGP session in accordance with various embodiments of the disclosure;
FIG. 7 is a flowchart depicting a process for exchanging route type capabilities between network devices from the perspective of a receiving network device to prevent a reset of a BGP session in accordance with various embodiments of the disclosure; and
FIG. 8 is a conceptual block diagram for one or more devices capable of executing components and logic for implementing the functionality and embodiments described above.

Corresponding reference characters indicate corresponding components throughout the several figures of the drawings. Elements in the several figures are illustrated for simplicity and clarity and have not necessarily been drawn to scale. For example, the dimensions of some of the elements in the figures might be emphasized relative to other elements for facilitating understanding of the various presently disclosed embodiments. In addition, common, but well-understood, elements that are useful or necessary in a commercially feasible embodiment are often not depicted to facilitate a less obstructed view of these various embodiments of the present disclosure.

### DETAILED DESCRIPTION

In response to the issues described above, devices and methods are discussed herein that exchange route type capabilities associated with an Address Family Indicator (AFI) and/or a subsequent address family indicator (SAFI) between peer network devices, for example, Border Gateway Protocol (BGP) speakers, to prevent a reset of a BGP session between the peer network devices when a particular route type is not supported by one of the peer network devices. The AFI and the SAFI may categorize and specify the type of routing information being exchanged between the BGP speakers. The AFI may define an address family, for example, Internet Protocol (IP) version 4 (IPv4) (AF1), IP version 6 (IPv6) (AF2), and Virtual Private Network (VPN) version 4 (VPNv4) (AFI 128), to which a particular route belongs, while the SAFI may refine the type of Network Layer Reachability Information (NLRI) including, for example, unicast, multicast, VPN routes, or the like, carried within a specific address family. For example, within the IPv4 address family (AFI 1), SAFIs may specify unicast routing (SAFI 1), multicast routing (SAFI 2), a Multiprotocol Label Switching (MPLS) label (SAFI 4), or the like. The AFI/SAFI combination may be utilized to identify a family of addresses. For example, an AFI/SAFI combination of "1/1" identifies IPv4 unicast addresses, and an AFI/SAFI combination of "2/2" identifies IPv6 multicast addresses.

Certain address families, for example, multicast VPN (MVPN or MCAST-VPN), Multicast Virtual Private LAN Service (MCASTVPLS), EVPN, or the like exhibit the capability of supporting multiple route types. Such capability is advertised within a Multiprotocol Reachable NLRI (MP_REACH_NLRI) attribute. Different route types have different key lengths and fields that form a BGP route key. These fields include attributes such as prefix, route distinguisher, next-hop information, etc., which are used to uniquely identify and manage routes for various address families within a BGP routing table. If a particular route type is not supported on a BGP speaker, the session is reset as there is no way to find the key by reading the MP_REACH_NLRI attribute. However, resetting a BGP session is expensive, and may impact a network adversely.

In certain address families like MCAST-VPN (as specified in RFC 6514), MCASTVPLS (as per RFC 7117), and EVPN (described in RFC 7432), the NLRI is categorized by type. The capability advertisement in Multiprotocol BGP (MP-BGP), as defined in RFC 4760, does not include specific type values for these address families. This means that a BGP speaker can announce its support for an address family and sub-address family pair (AFI/SAFI) without necessarily supporting every NLRI type within that pair. When a BGP speaker claims support for such a typed address family, it is required to appropriately handle routes that contain unrecognized NLRI types within that family. Specifically, the BGP speaker must discard such routes, unless otherwise directed by the specifications relevant to that address family. However, due to the lack of a mechanism to explicitly indicate that a route has been dropped because a specific NLRI type is not supported, the relevant specifications for typed address families typically direct that the BGP session should be reset when unsupported NLRI types are encountered.

The devices and methods discussed herein provide an optional capability exchange of route types per AFI/SAFI between BGP speakers (e.g., a first BGP speaker and a second BGP speaker). The optional capability exchange of route types enables the BGP speakers to negotiate the route types. Thus, only a particular route type advertised by the first BGP speaker is included in the MP_REACH_NLRI attribute of an update message transmitted by the second BGP speaker to the first BGP speaker. In other words, the second BGP speaker, which supports a set of route types, may select only those route types from the set of route types that were advertised by the first BGP speaker to the second BGP speaker in an announcing message (for example, an OPEN message) for inclusion in the MP_REACH_NLRI attribute. Thus, even though the second BGP speaker may support a specific route type, the specific route type is suppressed from being included in the update message transmitted by the second BGP speaker to the first BGP speaker if the specific route type is not advertised by the first BGP speaker in the announcing message.

In many embodiments, the devices and methods discussed herein provide a session logic that may allow an exchange of route type capabilities associated with an AFI and/or a SAFI between BGP speakers (e.g., a first BGP speaker and a second BGP speaker) to prevent a reset of the BGP session when a particular route type is not supported by one of the BGP speakers. In the above example, the second BGP speaker may receive the announcing message from the first BGP speaker, indicating a route type capability of the first BGP speaker. The second BGP speaker may select, based on the route type capability of the first BGP speaker, a subset of route types from the set of route types. The first BGP speaker may support the subset of route types. In other words, the subset of route types selected by the second BGP speaker may be supported by both the first and second BGP speakers. In more embodiments, the second BGP speaker may then transmit an update message (e.g., a BGP UPDATE message) advertising the subset of route types to the first BGP speaker. As the second BGP speaker may transmit only those route types that are supported or advertised in the capability exchange, a reset of the BGP session between the first BGP speaker and the second BGP speaker is prevented.

Aspects of the present disclosure may be embodied as an apparatus, a system, a method, or a computer program product. Accordingly, aspects of the present disclosure may take the form of an entirely hardware embodiment, an entirely software embodiment (including firmware, resident software, micro-code, or the like), or an embodiment combining software and hardware aspects that may all generally be referred to herein as a "function," a "module," an "apparatus," or a "system." Furthermore, aspects of the present disclosure may take the form of a computer program product embodied in one or more non-transitory computer-readable storage media storing computer-readable and/or executable program code. Many of the functional units described in this specification have been labeled as functions, to emphasize their implementation independence more particularly. For example, a function may be implemented as a hardware circuit comprising custom Very Large Scale Integration (VLSI) circuits or gate arrays, off-the-shelf semiconductors such as logic chips, transistors, or other discrete components. A function may also be implemented in programmable hardware devices such as via field programmable gate arrays, programmable array logic, programmable logic devices, or the like.

Functions may also be implemented at least partially in software for execution by various types of processors. An identified function of executable code may, for instance, comprise one or more physical or logical blocks of computer instructions that may, for instance, be organized as an object, procedure, or function. Nevertheless, the executables of an identified function need not be physically located together but may comprise disparate instructions stored in different locations which, when joined logically together, comprise the function and achieve the stated purpose for the function.

Indeed, a function of executable code may include a single instruction, or many instructions, and may even be distributed over several different code segments, among different programs, across several storage devices, or the like. Where a function or portions of a function are implemented in software, the software portions may be stored on one or more computer-readable and/or executable storage media. Any combination of one or more computer-readable storage media may be utilized. A computer-readable storage medium may include, for example, but not limited to, an electronic, magnetic, optical, electromagnetic, infrared, or semiconductor system, apparatus, or device, or any suitable combination of the foregoing, but would not include propagating signals. In the context of this document, a computer readable and/or executable storage medium may be any tangible and/or non-transitory medium that may contain or store a program for use by or in connection with an instruction execution system, apparatus, processor, or device.

Computer program code for carrying out operations for aspects of the present disclosure may be written in any combination of one or more programming languages, including an object-oriented programming language such as Python, Java, Smalltalk, C++, C#, Objective C, or the like, conventional procedural programming languages, such as the "C" programming language, scripting programming languages, and/or other similar programming languages. The program code may execute partly or entirely on one or more of a user's computer and/or on a remote computer or server over a data network or the like.

A component, as used herein, comprises a tangible, physical, non-transitory device. For example, a component may be implemented as a hardware logic circuit comprising custom VLSI circuits, gate arrays, or other integrated circuits; off-the-shelf semiconductors such as logic chips, transistors, or other discrete devices; and/or other mechanical or electrical devices. A component may also be implemented in programmable hardware devices such as field programmable gate arrays, programmable array logic, programmable logic devices, or the like. A component may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may alternatively be embodied by or implemented as a component.

A circuit, as used herein, comprises a set of one or more electrical and/or electronic components providing one or more pathways for electrical current. In certain embodiments, a circuit may include a return pathway for electrical current, so that the circuit is a closed loop. In another embodiment, however, a set of components that does not include a return pathway for electrical current may be referred to as a circuit (e.g., an open loop). For example, an integrated circuit may be referred to as a circuit regardless of whether the integrated circuit is coupled to ground (as a return pathway for electrical current) or not. In various embodiments, a circuit may include a portion of an integrated circuit, an integrated circuit, a set of integrated circuits, a set of non-integrated electrical and/or electrical components with or without integrated circuit devices, or the like. In one embodiment, a circuit may include custom VLSI circuits, gate arrays, logic circuits, or other integrated circuits; off-the-shelf semiconductors such as logic chips, transistors, or other discrete devices; and/or other mechanical or electrical devices. A circuit may also be implemented as a synthesized circuit in a programmable hardware device such as a field programmable gate array, a programmable array logic, a programmable logic device, or the like (e.g., as firmware, a netlist, or the like). A circuit may comprise one or more silicon integrated circuit devices (e.g., chips, die, die planes, packages) or other discrete electrical devices, in electrical communication with one or more other components through electrical lines of a printed circuit board (PCB) or the like. Each of the functions and/or modules described herein, in certain embodiments, may be embodied by or implemented as a circuit.

Reference throughout this specification to "one embodiment," "an embodiment," or similar language means that a particular feature, structure, or characteristic described in connection with the embodiment is included in at least one embodiment of the present disclosure. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to", unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise.

Further, as used herein, reference to reading, writing, storing, buffering, and/or transferring data can include the entirety of the data, a portion of the data, a set of the data, and/or a subset of the data. Likewise, reference to reading, writing, storing, buffering, and/or transferring non-host data can include the entirety of the non-host data, a portion of the non-host data, a set of the non-host data, and/or a subset of the non-host data.

Lastly, the terms "or" and "and/or" as used herein are to be interpreted as inclusive or meaning any one or any combination. Therefore, "A, B or C" or "A, B and/or C" mean "any of the following: A; B; C; A and B; A and C; B and C; A, B and C." An exception to this definition will occur only when a combination of elements, functions, steps, or acts are in some way inherently mutually exclusive.

Aspects of the present disclosure are described below with reference to schematic flowchart diagrams and/ or schematic block diagrams of methods, apparatuses, systems, and computer program products according to embodiments of the disclosure. It will be understood that each block of the schematic flowchart diagrams and/or schematic block diagrams, and combinations of blocks in the schematic flowchart diagrams and/or schematic block diagrams, can be implemented by computer program instructions. These computer program instructions may be provided to a processor of a computer or other programmable data processing apparatus to produce a machine, such that the instructions, which execute via the processor or other programmable data processing apparatus, create means for implementing the functions and/or acts specified in the schematic flowchart diagrams and/or schematic block diagrams block or blocks.

It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated figures. Although various arrow types and line types may be employed in the flowchart and/or block diagrams, they are understood not to limit the scope of the corresponding embodiments. For instance, an arrow may indicate a waiting or monitoring period of unspecified duration between enumerated steps of the depicted embodiment.

In the following detailed description, reference is made to the accompanying drawings, which form a part thereof. The foregoing summary is illustrative only and is not intended to be in any way limiting. In addition to the illustrative aspects, embodiments, and features described above, further aspects, embodiments, and features will become apparent by reference to the drawings and the following detailed description. The description of elements in each figure may refer to elements of proceeding figures. Like numbers may refer to like elements in the figures, including alternate embodiments of like elements.

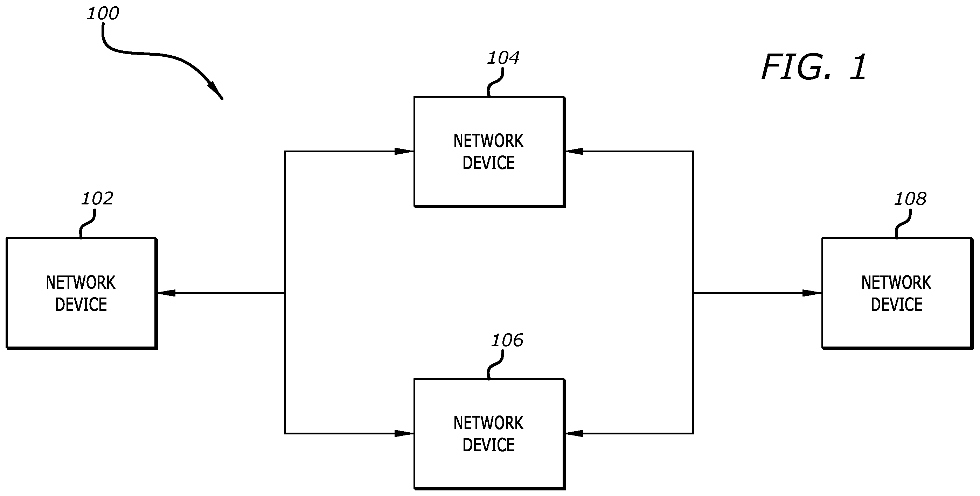

Referring to FIG. 1, a schematic block diagram of a network system 100 including a plurality of network devices supporting different route types in accordance with various embodiments of the disclosure is shown. As used herein, "route type" may refer to a classification or category of routes within a routing protocol, for example, a Border Gateway Protocol (BGP). The embodiments shown in FIG. 1 may illustrate network devices 102, 104, 106, 108 configured to support different route types, for example, Ethernet Virtual Private Network (EVPN) route types. EVPN may provide Layer 2 (L2) and Layer 3 (L3) VPN services over Ethernet-based networks. There can be specific route types configured to exchange routing and forwarding information between EVPN-enabled network devices including, for example, switches, routers, servers, and the like. These route types may facilitate the operation of EVPN networks and support different services and functionalities in EVPN deployments including, for example, forwarding, Media Access Control (MAC), and Internet Protocol (IP) address mobility.

The route types can be exchanged between the EVPN-enabled network devices using the BGP as the control plane protocol for the EVPN. In an example, the network devices 102, 106, and 108, for example, BGP-enabled routers (interchangeably referred to as "BGP speakers") may be configured to support EVPN route types 1 to 6, while the network device 104 may be configured to support EVPN route types 1 to 5, but not the EVPN route type 6. In this example, when the network device 102 transmits an update message including the EVPN route type 6 to the network device 104, the network device 104 may not understand the route type 6 and proceed to reset a BGP session between the network devices 102 and 104. Further, the BGP session may keep flapping between the network devices 102 and 104 since network device 102 may continue to advertise the route type 6 to the network device 104.

In many embodiments, the present disclosure may provide a session logic configured to allow an exchange of route type capabilities associated with an address family indicator (AFI) and/or a subsequent address family indicator (SAFI) between the network devices 102, 104, 106, and 108 to prevent a reset of the BGP session when a particular route type, for example, the route type 6, is not supported by a peer network device, for example, the network device 104.

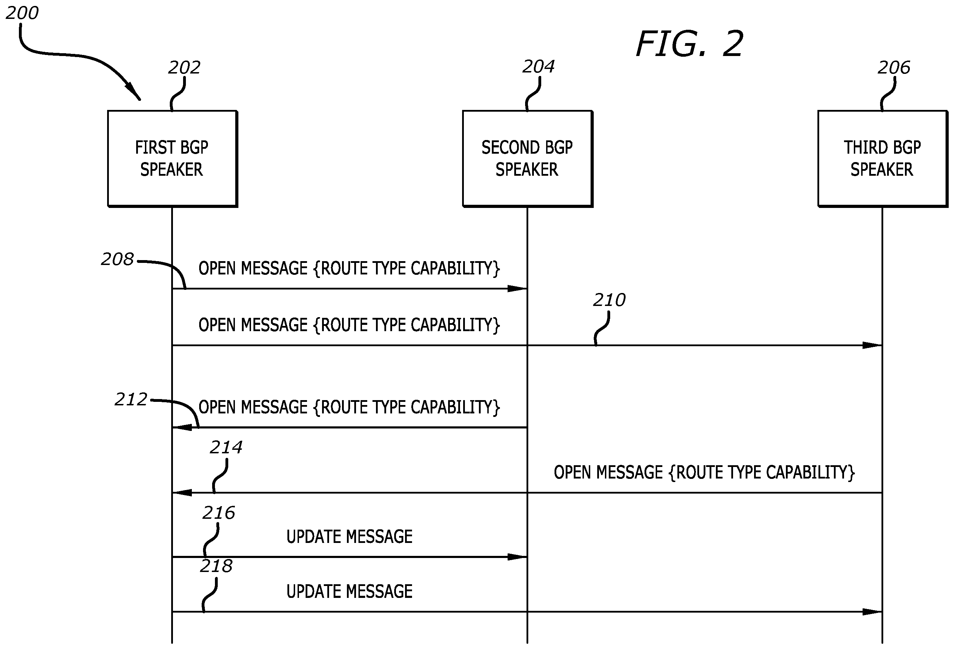

Although a specific embodiment for a network system 100 including a plurality of network devices supporting different route types suitable for carrying out the various steps, processes, methods, and operations described herein is discussed with respect to FIG. 1, any of a variety of systems and/or processes may be utilized in accordance with embodiments of the disclosure. For example, in several embodiments, in addition to route types configured to exchange routing and forwarding information between EVPN-enabled network devices, the devices and methods discussed herein may provide a capability exchange for route types supported by other address families including, for example, multicast VPN (MVPN or MCAST-VPN), L3 VPN for IPv4, L3 VPN for IPv6, multicast VPN (MVPN) for IPv4, multicast VPN for IPv6, or the like. The elements depicted in FIG. 1 may also be interchangeable with other elements of FIGS. 2 - 8 as required to realize a particularly desired embodiment.

Referring to FIG. 2, a schematic message flow diagram 200 for managing a BGP session between network devices in accordance with various embodiments of the disclosure is shown. The embodiments illustrated in FIG. 2 are described in the context of managing a BGP session between three network devices (for example, a first BGP speaker 202, a second BGP speaker 204, and a third BGP speaker 206) as a non-limiting example. The first BGP speaker 202, the second BGP speaker 204, and the third BGP speaker 206 may collectively be referred to as "the BGP speakers 202, 204, and 206". In an example, the BGP speakers 202, 204, and 206 can be routers, switches, or any other BGP-enabled network nodes.

In many embodiments, the BGP speakers 202, 204, and 206 may communicate with each other by establishing transmission control protocol (TCP) connections, also referred to as "BGP sessions" or "BGP peering sessions". To initiate a BGP session with peer BGP speakers, each BGP speaker (e.g., any of the BGP speakers 202, 204, and 206) may transmit announcing messages to the peer BGP speakers. In an example, the announcing message may correspond to a BGP OPEN message. The BGP OPEN message may include, for example, a BGP version number, an Autonomous System Number (ASN) of a sender of the BGP OPEN message, and optional capabilities such as Route Refresh, multiprotocol capabilities such as Ethernet Virtual Private Network (EVPN), Multicast Virtual Private Network (MVPN), or the like. In an example scenario shown in FIG. 2, to initiate a BGP session with the second BGP speaker 204, the first BGP speaker 202 may transmit (shown by an arrow 208) a BGP OPEN message to the second BGP speaker 204. Similarly, to initiate a BGP session with the third BGP speaker 206, the first BGP speaker 202 may transmit (shown by an arrow 210) another BGP OPEN message to the third BGP speaker 206.

In various embodiments, the announcing message may be further configured to indicate a route type capability of a transmitting BGP speaker to a receiving BGP speaker. For example, the BGP OPEN messages transmitted by the first BGP speaker 202 may be configured to indicate a route type capability of the first BGP speaker 202 to the second BGP speaker 204 and the third BGP speaker 206. The route type capability may correspond to the ability of the transmitting BGP speaker to handle and exchange routing information of some specific route types. In an example scenario where the first BGP speaker 202 supports EVPN route types 1 to 6, the route type capability in the BGP OPEN message may include "Route Types 1, 2, 3, 4, 5, 6", indicating the ability of the first BGP speaker 202 to handle and exchange routing information of the EVPN route types 1 to 6. Examples of different route types include, but are not limited to, IPv4 unicast, IPv6 unicast, IPv6 multicast, IPv6 unicast and multicast, IPX, Appletalk, Decnet IV, Banyan Vines, Domain Name System, XTP over IPv4, XTP over IPv6, EVPN, MVPN, and Fibre Channel WorldWide. In yet various embodiments, the announcing message may include a "route type capability" field that is configured to indicate the route type capability of the transmitting BGP speaker. In other words, the 'route type capability" field may indicate the route types the transmitting BGP speaker can support and advertise.

In several embodiments, a route type can be identified by an Address Family Indicator (AFI) value, by a unique combination of AFI and a Subsequent AFI (SAFI) values, or by any other parameter or parameters that can identify the type of a route. AFI and SAFI may correspond to fields within Multi-Protocol BGP extensions. The information included in the AFI and SAFI fields may inform a receiving BGP speaker regarding what address families and what specific sub-address families the transmitting BGP speaker will be transporting routes for. In several additional embodiments, the "route type capability" field may indicate the route type capability per AFI and SAFI combination, per AFI, or other parameters that can identify the type of a route. For example, during the establishment of the BGP sessions via the BGP OPEN messages, the BGP speakers 202, 204, and 206 may be configured to exchange route type capabilities per specific AFI/SAFI combinations.

Continuing the above example, the second BGP speaker 204 may also transmit (shown by an arrow 212) a BGP OPEN message (e.g., the announcing message) which may be configured to indicate a route type capability of the second BGP speaker 204 to the first BGP speaker 202. Similarly, the third BGP speaker 206 may also transmit (shown by an arrow 214) a BGP OPEN message (e.g., the announcing message) which may be configured to indicate a route type capability of the third BGP speaker 206 to the first BGP speaker 202.

In a non-limiting example, it is assumed that the first BGP speaker 202 is configured to support a first set of route types. Further, the second BGP speaker 204 is configured to support a second set of route types and the third BGP speaker 206 is configured to support a third set of route types. Thus, the "route type capability" field in the BGP OPEN message transmitted by the first BGP speaker 202 indicates support for the first set of route types. Likewise, the "route type capability" field in the BGP OPEN message transmitted by the second BGP speaker 204 indicates support for the second set of route types and the "route type capability" field in the BGP OPEN message transmitted by the third BGP speaker 206 indicates support for the third set of route types.

Once a BGP session is established and the BGP speakers 202, 204, and 206 have exchanged the announcing messages (e.g., the BGP OPEN messages) indicating the route type capabilities, each BGP speaker may advertise known routes to connected peer BGP speakers via update messages. In other words, the update messages are transmitted during the BGP sessions. In an example, the update messages may correspond to BGP UPDATE messages. In further embodiments, instead of advertising all known routes to a connected peer BGP speaker, a BGP speaker may be configured to advertise only those route types that are commonly supported by the BGP speaker and the connected peer BGP speaker. For example, to transmit an update message to the second BGP speaker 204, the first BGP speaker 202 may select a first subset of route types from the first set of route types based on the route type capability indicated in the announcing message by the second BGP speaker 204. The first subset of route types may include those route types that are also supported by the second BGP speaker 204. In other words, the first subset of route types may correspond to an intersection of the first and second sets of route types. Thus, any route type in the first set of route types that is not supported by the second BGP speaker 204 may remain unselected. Likewise, to transmit an update message to the third BGP speaker 206, the first BGP speaker 202 may select a second subset of route types from the first set of route types based on the route type capability indicated in the announcing message by the third BGP speaker 206.

Continuing the above example, the first BGP speaker 202 may transmit (shown by an arrow 216) to the second BGP speaker 204, a BGP UPDATE message which may be configured to advertise the first subset of route types selected for the second BGP speaker 204. Similarly, the first BGP speaker 202 may transmit (shown by an arrow 218) to the third BGP speaker 206, a BGP UPDATE message which may be configured to advertise the second subset of route types selected for the third BGP speaker 206. As such, the first BGP speaker 202 may not transmit the route types that are not supported by peers, that is, the second BGP speaker 204 and the third BGP speaker 206, thereby preventing a reset of the BGP session. Thus, the BGP AFI/SAFI that supports route types, for example, EVPN, MVPN, or the like, may carry the route types that are supported as a part of the exchange of route type capabilities, also referred to as the "capability exchange", such that the first BGP speaker 202 may transmit only those route types that are supported or advertised in the capability exchange.

In an example scenario, the first BGP speaker 202 may transmit BGP OPEN messages indicating a route type capability associated with an AFI/SAFI for EVPN that supports route types 1, 2, 3, 4, 5, and 6, to the second BGP speaker 204 and the third BGP speaker 206. Similarly, the second BGP speaker 204 may transmit a BGP OPEN message indicating a route type capability associated with the AFI/SAFI for EVPN that supports route types 1, 2, 3, 4, and 5, to the first BGP speaker 202. In this example scenario, the second BGP speaker 204 does not support the route type 6. Similarly, the third BGP speaker 206 may transmit a BGP OPEN message indicating a route type capability associated with the AFI/SAFI for EVPN that supports route types 1, 2, 3, 4, 5, 6, and 7, to the first BGP speaker 202. In response, the first BGP speaker 202 may transmit a BGP UPDATE message advertising only the route types 1, 2, 3, 4, and 5, while suppressing the unsupported route type 6, to the second BGP speaker 204. Similarly, the first BGP speaker 202 may transmit a BGP UPDATE message advertising the route types 1, 2, 3, 4, 5, and 6 to the third BGP speaker 206. In such a scenario, the first BGP speaker 202 may not advertise the route type 7 in the BGP UPDATE message to the third BGP speaker 206 as the first BGP speaker 202 does not support the route type 7. Consequently, BGP session resets caused by the advertisement of unsupported route types in BGP UPDATE messages are prevented.

Although a specific embodiment for a method for managing a BGP session between network devices suitable for carrying out the various steps, processes, methods, and operations described herein is discussed with respect to FIG. 2, any of a variety of systems and/or processes may be utilized in accordance with embodiments of the disclosure. For example, while FIG. 2 discloses a BGP session established between three BGP speakers 202, 204, and 206, the present disclosure may allow establishment of multiple BGP sessions between either two BGP speakers or more than three BGP speakers simultaneously for exchanging route type capabilities associated with an AFI and/or SAFI to prevent a reset of multiple BGP sessions when a particular route type is not supported by a peer BGP speaker. The elements depicted in FIG. 2 may also be interchangeable with other elements of FIG. 1 and FIGS. 3 - 8 as required to realize a particularly desired embodiment.

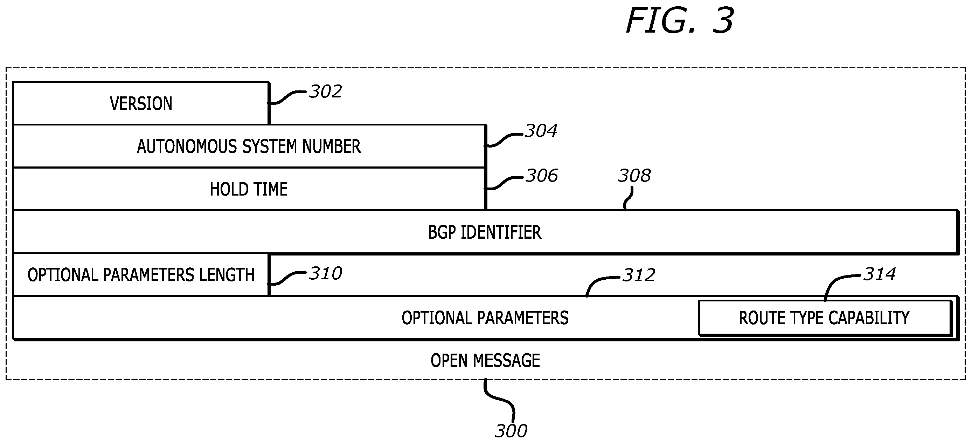

Referring to FIG. 3, a conceptual schematic diagram of an example BGP OPEN message 300 indicating a route type capability of a network device in accordance with various embodiments of the disclosure is shown. In various embodiments, the format of the BGP OPEN message 300 (also referred to as "announcing message") may include multiple fields, for example, a Version field 302, an Autonomous System Number (ASN) field 304, a Hold Time field 306, a BGP Identifier field 308, an Optional Parameters Length field 310, and an Optional Parameters field 312.

In many embodiments, the Version field 302 may be a one-byte unsigned integer configured to indicate the protocol version number, for example, BGP4. The ASN field 304 may be a two-byte unsigned integer configured to indicate the ASN of the network device, for example, a BGP speaker. The Hold Time field 306 may indicate a hold time negotiated by two network devices, for example, BGP speakers, during the establishment of a BGP session. The BGP Identifier field 308 may indicate an IP address that identifies a BGP speaker. The Optional Parameters Length field 310 may indicate the length of optional parameters, which may be set to 0 if no optional parameter is available. In a number of embodiments, the Optional Parameters field 312 may indicate optional capabilities (e.g., Route Refresh, Multi-Protocol Capabilities, or the like) of the BGP speaker. In a variety of embodiments, the Optional Parameters field 312 may be configured to indicate a route type capability 314 of the network device. The route type capability 314 may be configured to indicate one or more route types supported by the network device. In several embodiments, the route type capability 314 may be associated with at least one of an AFI or an SAFI.

In further embodiments, the BGP OPEN message 300 may include an Optional Parameters Code field. The Optional Parameters Code field may include unique identifier codes associated with the optional capabilities indicated in the Optional Parameters field 312. Thus, when the BGP OPEN message 300 includes the route type capability 314, the Optional Parameters Code field may include a unique identifier code assigned to (or allocated to) the route type capability 314.

Although a specific embodiment for a BGP OPEN message 300 indicating a route type capability 314 of a network device suitable for carrying out the various steps, processes, methods, and operations described herein is discussed with respect to FIG. 3, any of a variety of systems and/or processes may be utilized in accordance with embodiments of the disclosure. For example, an alternative message format with additional multiprotocol extensions and functions configured for the BGP or another exterior gateway protocol may be utilized to indicate the route type capability of a network device. The elements depicted in FIG. 3 may also be interchangeable with other elements of FIGS. 1 - 2 and FIGS. 4 - 8 as required to realize a particularly desired embodiment.

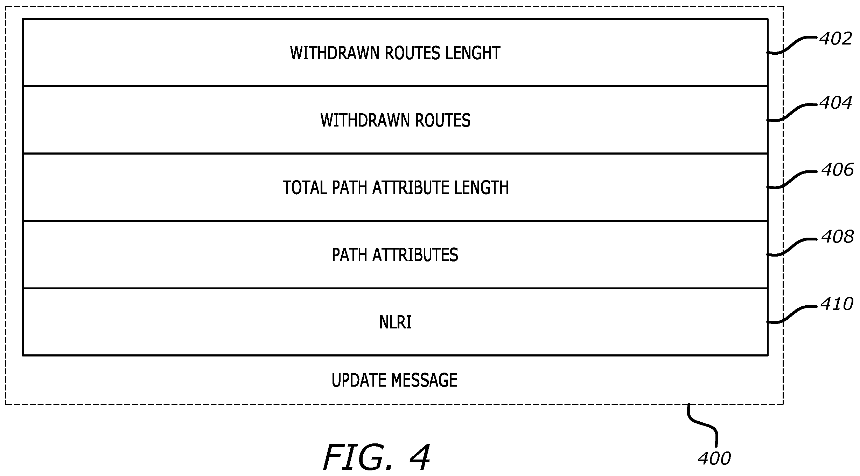

Referring to FIG. 4, a conceptual schematic diagram of an example BGP UPDATE message 400 for advertising a subset of route types to a network device in accordance with various embodiments of the disclosure is shown. In many embodiments, the BGP UPDATE message 400 may include multiple fields, for example, a Withdrawn Routes Length field 402, a Withdrawn Routes field 404, a Total Path Attribute Length field 406, a Path Attributes field 408, and a Network Layer Reachability Information (NLRI) field 410. The Withdrawn Routes Length field 402 may indicate the total length of the withdrawn routes field in bytes. A value of '0' may indicate that no route is withdrawn from service and that the withdrawn routes field is absent in the BGP UPDATE message 400. The Withdrawn Routes field 404 is a variable length field that may include a list of withdrawn IP prefixes. In additional embodiments, to enable the exchange of multiprotocol reachability information, the Multiprotocol BGP (MP-BGP) can define path attributes, for example, a Multiprotocol Reachable NLRI (MP_REACH_NLRI) attribute and a Multiprotocol Unreachable NLRI (MP_UNREACH_NLRI) attribute, to be utilized in the BGP UPDATE message 400. The MP_UNREACH_NLRI path attribute may allow withdrawal of multiple unfeasible or unreachable routes from service, where the unfeasible routes are included in the Withdrawn Routes field 404 as <length, prefix> tuples.

The Total Path Attribute Length field 406 may indicate the length of the path attributes field in bytes. A value of '0' in the Total Path Attribute Length field 406 may indicate that the NLRI field 410 is absent in the BGP UPDATE message 400. The Path Attributes field 408 may indicate a list of path attributes related to the NLRI. Each of the path attributes can be a triple <attribute type, attribute length, attribute value> of variable length. The BGP may utilize these path attributes to avoid routing loops and to perform routing and protocol extensions.

In many embodiments, the NLRI field 410 may be utilized to indicate the MP_REACH_NLRI attribute. The MP_REACH_NLRI attribute may allow for advertising feasible or reachable routes to a network device, for example, a BGP speaker. The feasible routes may be included in the NLRI field as <length, prefix> tuples. In some embodiments, the MP_REACH_NLRI attribute may allow the network device to advertise a particular route type (e.g., the subset of route types) only if a peer network device has advertised that particular route type in an announcing message, e.g., a BGP OPEN message.

Although a specific embodiment for a BGP UPDATE message 400 for advertising a subset of route types to a network device suitable for carrying out the various steps, processes, methods, and operations described herein is discussed with respect to FIG. 4, any of a variety of systems and/or processes may be utilized in accordance with embodiments of the disclosure. For example, an alternative message format with additional multiprotocol extensions and functions configured for the BGP or another exterior gateway protocol may be utilized for advertising the subset of route types to a peer network device. The elements depicted in FIG. 4 may also be interchangeable with other elements of FIGS. 1 - 3 and FIGS. 5 - 8 as required to realize a particularly desired embodiment.

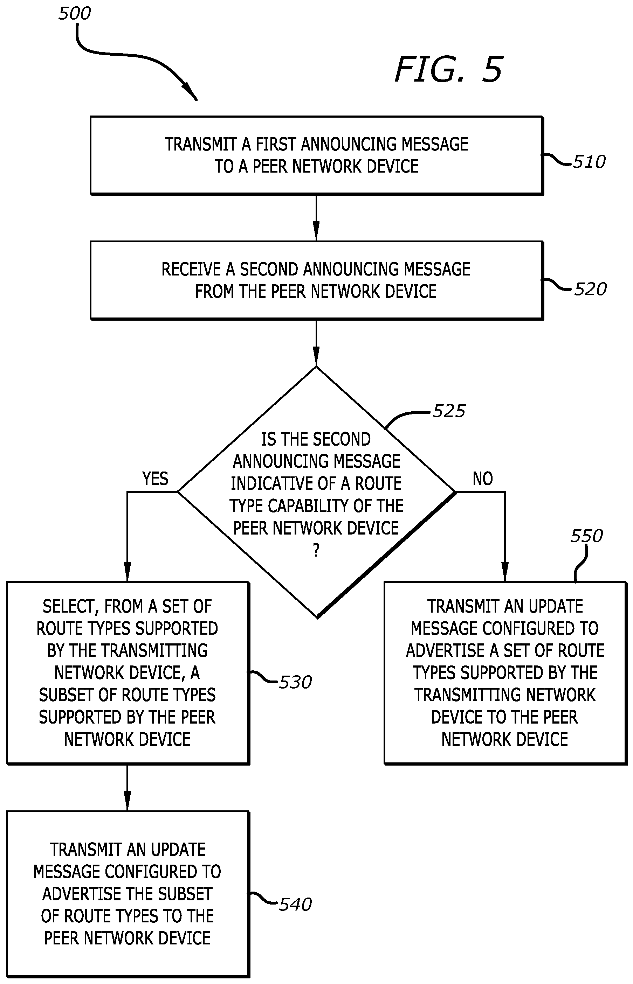

Referring to FIG. 5, a flowchart depicting a process 500 for exchanging route type capabilities between network devices from the perspective of a transmitting network device to prevent a reset of a BGP session in accordance with various embodiments of the disclosure is shown. As used herein, "transmitting network device" may refer to a network device that transmits messages, for example, open and update messages, to a receiving network device. Also, as used herein, "receiving network device" may refer to a network device that receives messages, for example, open and update messages, from the transmitting network device. Consider an example where two network devices, for example, a transmitting network device and a receiving network device, establish a TCP connection to communicate with each other and to initiate a BGP session. In many embodiments, the transmitting network device may support a first set of route types. The receiving network device is herein referred to as a "peer network device". In a number of embodiments, the peer network device may support a second set of route types. In a variety of embodiments, the transmitting network device can execute a session logic that may be configured to: receive an announcing message that indicates a route type capability of the peer network device; select, based on the route type capability of the peer network device, a subset of route types from a set of route types; and transmit an update message that advertises the subset of route types to the peer network device.

In various embodiments, the process 500 may transmit a first announcing message to a peer network device (block 510). In more embodiments, the first announcing message may be configured to indicate a route type capability of the transmitting network device to the peer network device. In an example, if the transmitting network device supports the first set of route types, a route type capability field in the first announcing message may indicate details of the first set of route types. In still more embodiments, the process 500 can transmit the first announcing message prior to transmitting an update message.

In further embodiments, the process 500 may receive a second announcing message from the peer network device (block 520). In additional embodiments, the second announcing message may be configured to indicate a route type capability of the peer network device to the transmitting network device. In some more embodiments, the route type capability may indicate one or more route types supported by the peer network device. For example, if the peer network device supports the second set of route types, the second announcing message may indicate details of the second set of route types. In still additional embodiments, the process 500 may establish a BGP session between the transmitting network device and the peer network device based on the first and second announcing messages. In several embodiments, the first and second announcing messages may correspond to BGP OPEN messages. In several more embodiments, the BGP OPEN messages can include an optional parameters field configured to indicate the route type capability.

In still further embodiments, the route type capability may be associated with an Address Family Indicator (AFI). In yet more embodiments, the route type capability may be associated with a subsequent AFI (SAFI). In still yet more embodiments, the route type capability may be associated with the AFI and the SAFI. In many further embodiments, the first and second announcing messages may be further configured to indicate corresponding AFIs. In many additional embodiments, the first and second announcing messages may be further configured to indicate corresponding SAFIs. In yet further embodiments, the first and second announcing messages may be configured to indicate corresponding AFIs and SAFIs.

In numerous embodiments, the process 500 may determine whether the second announcing message is indicative of a route type capability of the peer network device (block 525). In an example, the route type capability may be associated with a unique identifier code. The unique identifier code may refer to a capability code assigned for route type capability exchange between network devices. The unique identifier code may be configured to comply with an international standard and may be assigned, for example, by the Internet Assigned Numbers Authority (IANA) according to policies and procedures of the IANA. In still yet further embodiments, the process 500 may determine whether the second announcing message is indicative of the route type capability of the peer network device based on the unique identifier code assigned to the route type capability exchange. For example, if the second announcing message includes the unique identifier code assigned to the route type capability exchange, the process 500 may determine that the second announcing message is indicative of the route type capability of the peer network device. However, if the second announcing message does not include the unique identifier code assigned to the route type capability exchange, the process 500 may determine that the second announcing message is not indicative of the route type capability of the peer network device.

In numerous additional embodiments, in response to determining the second announcing message is indicative of the route type capability of the peer network device, the process 500 may select, from the first set of route types supported by the transmitting network device, a subset of route types supported by the peer network device (block 530). For example, the process 500 may select the subset of route types from the first set of route types based on the route type capability indicated in the second announcing message. The subset of route types may include those route types that are supported by the transmitting network device and the peer network device. In other words, the subset of route types may correspond to an intersection of the first and second sets of route types. Thus, any route type in the first set of route types that is not supported by the peer network device may remain unselected.

In further additional embodiments, the process 500 may transmit an update message configured to advertise the subset of route types to the peer network device (block 540). In still yet additional embodiments, the update message may correspond to a BGP UPDATE message. In still yet further embodiments, the BGP UPDATE message can include an NLRI field configured to advertise the subset of route types. In several additional embodiments, the process 500 may transmit the update message during the BGP session.

However, in yet various embodiments, in response to determining the second announcing message is not indicative of the route type capability of the peer network device, the process 500 may transmit an update message configured to advertise the first set of route types supported by the transmitting network device to the peer network device (block 550).

Although a specific embodiment for a process 500 for exchanging route type capabilities between network devices from the perspective of a transmitting network device to prevent a BGP session reset suitable for carrying out the various steps, processes, methods, and operations described herein is discussed with respect to FIG. 5, any of a variety of systems and/or processes may be utilized in accordance with embodiments of the disclosure. For example, in addition to advertising the subset of route types to the peer network device, the update message may be configured to indicate the route type that is suppressed or unsupported to the peer network device. The elements depicted in FIG. 5 may also be interchangeable with other elements of FIGS. 1 - 4 and FIGS. 6 - 8 as required to realize a particularly desired embodiment.

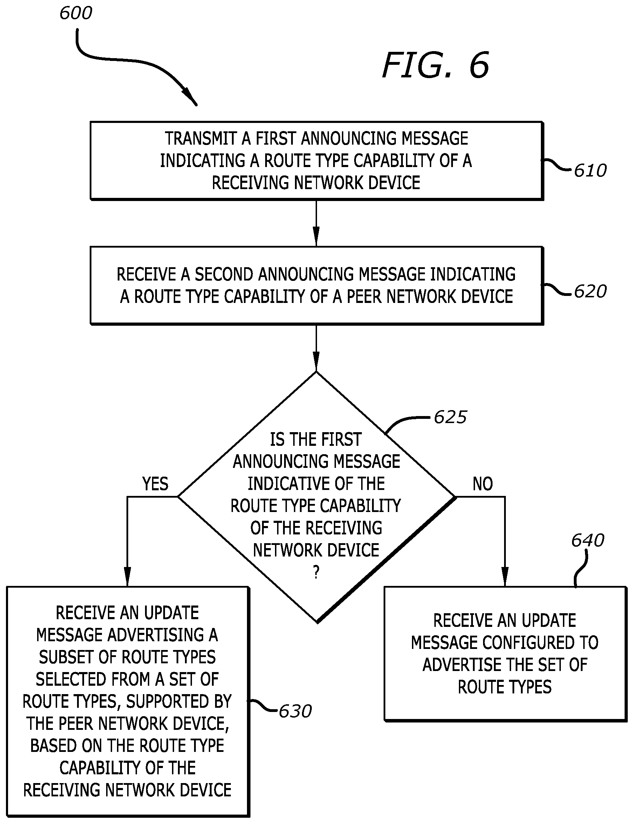

Referring to FIG. 6, a flowchart depicting a process 600 for exchanging route type capabilities between network devices from the perspective of a receiving network device to prevent a reset of a BGP session in accordance with various embodiments of the disclosure is shown. Consider an example where two network devices, for example, a transmitting network device and a receiving network device, establish a TCP connection to communicate with each other and to initiate a BGP session. The transmitting network device is herein referred to as a "peer network device". In many embodiments, the peer network device may support a first set of route types and the receiving network device may support a second set of route types. In a number of embodiments, the receiving network device and the peer network device may be configured to act as BGP speakers. In a variety of embodiments, the receiving network device can execute a session logic that may be configured to: transmit an announcing message that indicates a route type capability of the receiving network device to the peer network device; and receive, in response to the announcing message, an update message from the peer network device. In various embodiments, the update message may be configured to advertise a subset of route types selected from the first set of route types based on the route type capability. In many embodiments, the subset of route types may be supported by the receiving network device.

In additional embodiments, the process 600 may transmit a first announcing message indicating a route type capability of the receiving network device (block 610). In further embodiments, the process 600 may receive a second announcing message indicating a route type capability of the peer network device (block 620). In still more embodiments, the process 600 may establish a BGP session between the receiving network device and the peer network device based on the first announcing message and the second announcing message. In still further embodiments, the first announcing message and the second announcing message may correspond to BGP OPEN messages. In still additional embodiments, each BGP OPEN message can include an optional parameters field configured to indicate the route type capability. In many examples, the receiving network device and the peer network device may correspond to routers, switches, or any other BGP-enabled network nodes.

In some more embodiments, the process 600 may determine whether the first announcing message is indicative of the route type capability of the receiving network device (block 625). In an example, the route type capability may be associated with a unique identifier code. The unique identifier code may refer to a capability code assigned for route type capability exchange between network devices. The unique identifier code may be configured to comply with an international standard and may be assigned, for example, by the IANA according to policies and procedures of the IANA. In still yet further embodiments, the process 600 may determine whether the first announcing message is indicative of the route type capability based on the unique identifier code assigned to the route type capability exchange. For example, if the first announcing message includes the unique identifier code assigned to the route type capability exchange, the process 600 may determine that the first announcing message is indicative of the route type capability. However, if the first announcing message does not include the unique identifier code assigned to the route type capability exchange, the process 600 may determine that the first announcing message is not indicative of the route type capability.

In various embodiments, if the first announcing message is indicative of the route type capability of the receiving network device, the process 600 may receive an update message advertising a subset of route types selected from the first set of route types, supported by the peer network device, based on the route type capability of the receiving network device (block 630). For example, the subset of route types may include those route types that are supported by the peer network device and the receiving network device. In other words, the subset of route types may correspond to an intersection of the first and second sets of route types. Thus, any route type in the first set of route types that is not supported by the receiving network device may not be included in the update message. In yet more embodiments, the update message may correspond to a BGP UPDATE message. In still yet more embodiments, the BGP UPDATE message may include an NLRI field configured to advertise the subset of route types.

However, in many further embodiments, if the first announcing message is not indicative of the route type capability of the receiving network device, the process 600 may receive an update message configured to advertise the first set of route types (block 640). In many additional embodiments, the process 600 may receive the update message during the BGP session.

In still yet further embodiments, the process 600 may determine an update in the route type capability of the receiving network device. In still yet additional embodiments, the process 600 may transmit a new announcing message configured to indicate the updated route type capability to the peer network device. In several embodiments, when the receiving network device, for example, a BGP speaker, is configured to support a new route type as part of a software update, the receiving network device may transmit a new announcing message configured to advertise the additionally supported new route type to the peer network device. The peer network device may then transmit BGP updates with the additionally supported new route type.

Although a specific embodiment for a process 600 for exchanging route type capabilities between network devices from the perspective of a receiving network device to prevent a reset of a BGP session suitable for carrying out the various steps, processes, methods, and operations described herein is discussed with respect to FIG. 6, any of a variety of systems and/or processes may be utilized in accordance with embodiments of the disclosure. For example, in several more embodiments, Command Line Interface (CLI) commands and network monitoring tools that support BGP monitoring may be utilized to compare and determine updates in the route type capabilities for advertising additionally supported new route types. The elements depicted in FIG. 6 may also be interchangeable with other elements of FIGS. 1 - 5 and FIGS. 7 - 8 as required to realize a particularly desired embodiment.

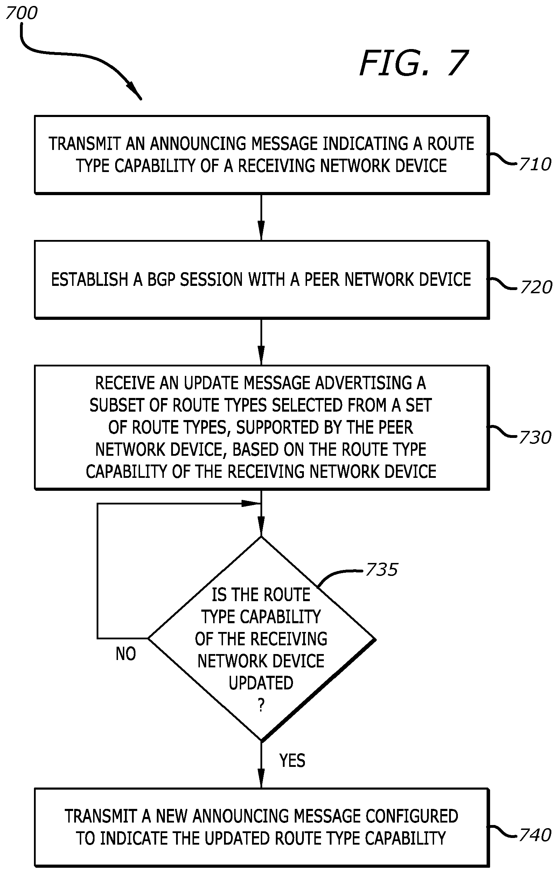

Referring to FIG. 7, a flowchart depicting a process 700 for exchanging route type capabilities between network devices from the perspective of a receiving network device to prevent a reset of a BGP session in accordance with various embodiments of the disclosure is shown. Consider an example where two network devices, for example, a transmitting network device and a receiving network device, establish a TCP connection to communicate with each other and to initiate a BGP session. The transmitting network device is herein referred to as a "peer network device". In many embodiments, the peer network device may support a first set of route types and the receiving network device may support a second set of route types.

In a number of embodiments, the process 700 may transmit an announcing message indicating a route type capability of the receiving network device (block 710). In a variety of embodiments, the announcing message may correspond to a BGP OPEN message. In several embodiments, the BGP OPEN message can include an optional parameters field configured to indicate the route type capability. In several additional embodiments, a new extension can be defined in BGP OPEN messages to indicate the route type capability. In various embodiments, the announcing message may correspond to a new message type defined for indicating the route type capability of the receiving network device. In more embodiments, the process 700 may establish a BGP session with the peer network device (block 720). In an example, the BGP session between the receiving network device and the peer network device may be established based on exchange of announcing messages.

In additional embodiments, the process 700 may receive an update message advertising a subset of route types selected from a set of route types, supported by the peer network device, based on the route type capability of the receiving network device (block 730). For example, if the peer network device supports the first set of route types and the receiving network device supports the second set of route types, the subset of route types may include an intersection of the first and second sets of route types. In further embodiments, the update message may correspond to a BGP UPDATE message. In still more embodiments, the BGP UPDATE message may include an NLRI field configured to advertise the subset of route types. In still further embodiments, the process 700 may transmit the update message during the BGP session.

In still additional embodiments, the process 700 may determine whether the route type capability of the receiving network device is updated (block 735). Update in the route type capability may refer to addition of one or more new route types in the second set of route types or withdrawal of one or more route types from the second set of route types. In several more embodiments, Command Line Interface (CLI) commands and network monitoring tools that support BGP monitoring may be utilized to compare and determine updates in the route type capabilities.

In some more embodiments, in response to determining the route type capability of the network device is updated, the process 700 may transmit a new announcing message configured to indicate the updated route type capability (block 740). The process 700 may receive a new update message from the peer network device if the updated route type capability introduces any change the intersection of the first and second sets of route types. For example, if the updated route type capability indicates withdrawal of a specific route type that is supported by the peer network device, the subset of route types included in the new update message from the peer network device may not include the specific route type. Further, if the updated route type capability indicates the addition of a new route type that is also supported by the peer network device, the subset of route types included in the new update message from the peer network device may now additionally include the new route type. However, in certain embodiments, in response to determining the route type capability of the network device is not updated, the process 700 may return to determining whether the route type capability of the network device is updated (block 735) and repeat.

Although a specific embodiment for a process 700 for exchanging route type capabilities between network devices from the perspective of a receiving network device to prevent a reset of a BGP session suitable for carrying out the various steps, processes, methods, and operations described herein is discussed with respect to FIG. 7, any of a variety of systems and/or processes may be utilized in accordance with embodiments of the disclosure. For example, updates to the route type capability may be indicated in different extensions of the optional parameters field of an announcing message. The elements depicted in FIG. 7 may also be interchangeable with other elements of FIGS. 1 - 6 and FIG. 8 as required to realize a particularly desired embodiment.

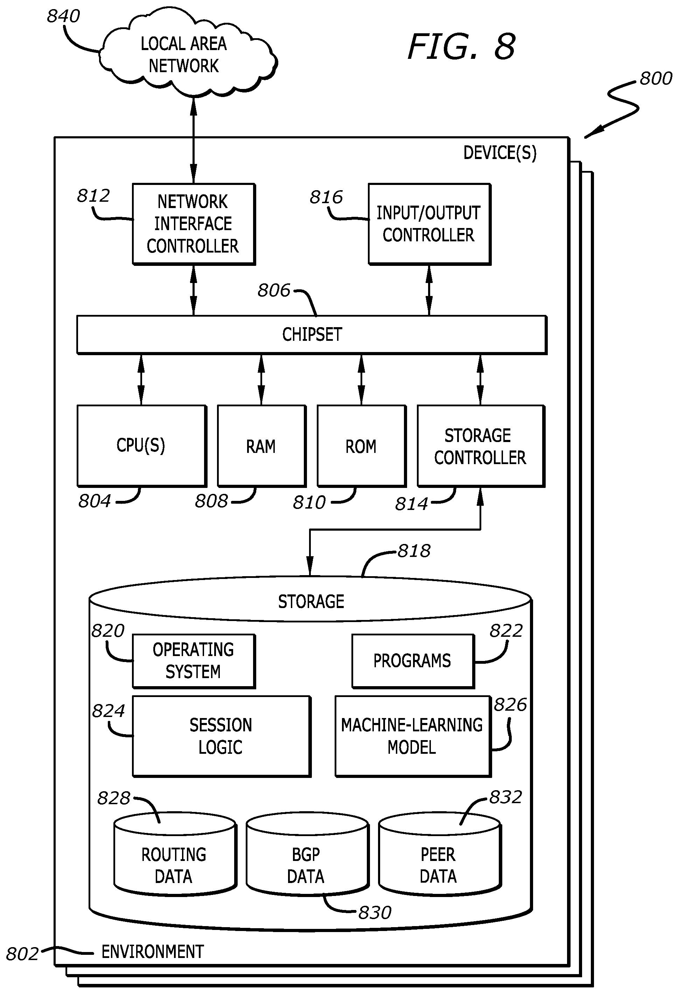

Referring to FIG. 8, a conceptual block diagram for one or more devices 800 capable of executing components and logic for implementing the functionality and embodiments described above is shown. The embodiment of the conceptual block diagram depicted in FIG. 8 can illustrate a conventional server computer, a workstation, a desktop computer, a laptop, a tablet, a network appliance, an electronic reader (e-reader), a smartphone, or other computing device, and can be utilized to execute any of the application and/or logic components presented herein. The device(s) 800 may, in some examples, correspond to physical devices or to virtual resources described herein.

In many embodiments, the device(s) 800 may include an environment 802 such as a baseboard or a "motherboard," in physical embodiments that can be configured as a printed circuit board with a multitude of components or devices connected by way of a system bus or other electrical communication paths. Conceptually, in virtualized embodiments, the environment 802 may be a virtual environment that encompasses and executes the remaining components and resources of the device(s) 800. In more embodiments, one or more processors 804, such as, but not limited to, central processing units (CPUs) can be configured to operate in conjunction with a chipset 806. The processor(s) 804 can be standard programmable CPUs that perform arithmetic and logical operations necessary for the operation of the device(s) 800.

In additional embodiments, the processor(s) 804 can perform one or more operations by transitioning from one discrete, physical state to the next through the manipulation of switching elements that differentiate between and change these states. Switching elements generally include electronic circuits that maintain one of two binary states, such as flip-flops, and electronic circuits that provide an output state based on the logical combination of the states of one or more other switching elements, such as logic gates. These basic switching elements can be combined to create more complex logic circuits, including registers, adders-subtractors, arithmetic logic units, floating-point units, and the like.

In certain embodiments, the chipset 806 may provide an interface between the processor(s) 804 and the remainder of the components and devices within the environment 802. The chipset 806 can provide an interface to a random-access memory (RAM) 808, which can be used as the main memory in the device(s) 800 in some embodiments. The chipset 806 can further be configured to provide an interface to a computer-readable storage medium such as a read-only memory (ROM) 810 or a non-volatile RAM (NVRAM) for storing basic routines that can help with various tasks such as, but not limited to, starting up the device(s) 800 and/or transferring information between the various components and devices. The ROM 810 or NVRAM can also store other application components necessary for the operation of the device(s) 800 in accordance with various embodiments described herein.

Different embodiments of the device(s) 800 can be configured to operate in a networked environment using logical connections to remote computing devices and computer systems through a network, such as the network 840. The chipset 806 can include functionality for providing network connectivity through a network interface controller (NIC) 812, which may include a gigabit Ethernet adapter or similar component. The NIC 812 can be capable of connecting the device(s) 800 to other devices over the network 840. It is contemplated that multiple NICs 812 may be present in the device(s) 800, connecting the device(s) 800 to other types of networks and remote systems.

In further embodiments, the device(s) 800 can be connected to a storage 818 that provides non-volatile storage for data accessible by the device(s) 800. The storage 818 can, for example, store an operating system 820, applications or programs 822, routing data 828, BGP data 830, and peer data 832, which are described in greater detail below. The storage 818 can be connected to the environment 802 through a storage controller 814 connected to the chipset 806. In certain embodiments, the storage 818 can include one or more physical storage units. The storage controller 814 can interface with the physical storage units through a serial attached SCSI (SAS) interface, a serial advanced technology attachment (SATA) interface, a fiber channel (FC) interface, or other type of interface for physically connecting and transferring data between computers and physical storage units.

The device(s) 800 can store data within the storage 818 by transforming the physical state of the physical storage units to reflect the information being stored. The specific transformation of physical state can depend on various factors. Examples of such factors can include, but are not limited to, the technology used to implement the physical storage units, whether the storage 818 is characterized as primary or secondary storage, and the like.

For example, the device(s) 800 can store information within the storage 818 by issuing instructions through the storage controller 814 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit, or the like. Other transformations of physical media are possible without departing from the scope and spirit of the present description, with the foregoing examples provided only to facilitate this description. The device(s) 800 can further read or access information from the storage 818 by detecting the physical states or characteristics of one or more particular locations within the physical storage units.

In addition to the storage 818 described above, the device(s) 800 can have access to other computer-readable storage media to store and retrieve information, such as program modules, data structures, or other data. It should be appreciated by those skilled in the art that computer-readable storage media is any available media that provides for the non-transitory storage of data and that can be accessed by the device(s) 800. In some examples, the operations performed by a cloud computing network, and or any components included therein, may be supported by one or more devices similar to the device(s) 800. Stated otherwise, some or all of the operations performed by the cloud computing network, and or any components included therein, may be performed by one or more devices 800 operating in a cloud-based arrangement.

By way of example, and not limitation, computer-readable storage media can include volatile and non-volatile, removable and non-removable media implemented in any method or technology. Computer-readable storage media includes, but is not limited to, RAM, ROM, erasable programmable ROM (EPROM), electrically-erasable programmable ROM (EEPROM), flash memory or other solid-state memory technology, compact disc ROM (CDROM), digital versatile disk (DVD), high definition DVD (HD-DVD), BLU-RAY, or other optical storage, magnetic cassettes, magnetic tape, magnetic disk storage or other magnetic storage devices, or any other medium that can be used to store the desired information in a non-transitory fashion.

As mentioned briefly above, the storage 818 can store an operating system 820 utilized to control the operation of the device(s) 800. According to one embodiment, the operating system 820 includes the LINUX operating system. According to another embodiment, the operating system 820 includes the WINDOWS^{®} SERVER operating system from MICROSOFT Corporation of Redmond, Washington. According to further embodiments, the operating system 820 can include the UNIX operating system or one of its variants. It should be appreciated that other operating systems can also be utilized. The storage 818 can store other system or application programs and data utilized by the device(s) 800.

In various embodiment, the storage 818 or other computer-readable storage media is encoded with computer-executable instructions which, when loaded into the device(s) 800, may transform it from a general-purpose computing system into a special-purpose computer capable of implementing the embodiments described herein. These computer-executable instructions may be stored as applications or programs 822 and transform the device(s) 800 by specifying how the processor(s) 804 can transition between states, as described above. In some embodiments, the device(s) 800 has access to computer-readable storage media storing computer-executable instructions which, when executed by the device(s) 800, perform the various processes described above with regard to FIGS. 1 - 7. In more embodiments, the device(s) 800 can also include computer-readable storage media having instructions stored thereupon for performing any of the other computer-implemented operations described herein.

In still further embodiments, the device(s) 800 can also include one or more input/output controllers 816 for receiving and processing input from a number of input devices, such as a keyboard, a mouse, a touchpad, a touch screen, an electronic stylus, or other type of input device. Similarly, an input/output controller 816 can be configured to provide output to a display, such as a computer monitor, a flat panel display, a digital projector, a printer, or other type of output device. Those skilled in the art will recognize that the device(s) 800 may not include all of the components shown in FIG. 8, and can include other components that are not explicitly shown in FIG. 8, or may utilize an architecture completely different than that shown in FIG. 8.

As described above, the device(s) 800 may support a virtualization layer, such as one or more virtual resources executing on the device(s) 800. In some examples, the virtualization layer may be supported by a hypervisor that provides one or more virtual machines running on the device(s) 800 to perform functions described herein. The virtualization layer may generally support a virtual resource that performs at least a portion of the techniques described herein.

In many embodiments, the device(s) 800 can include a session logic 824. The session logic 824 may be responsible for exchanging route type capabilities associated with an AFI and/or a SAFI between peer network devices, for example, BGP speakers, to prevent a reset of a BGP session between the peer network devices when a particular route type is not supported by one of the peer network devices. The session logic 824 can be configured to perform various operations such as, but not limited to, receiving an announcing message that indicates a route type capability of a peer network device; selecting, based on the route type capability of the peer network device, a subset of route types from a set of route types supported by the device 800; and transmitting an update message that advertises the subset of route types to the peer network device. The route type capability may indicate one or more route types supported by the peer network device. In several embodiments, the update message may be transmitted during a BGP session established between the device 800 and the peer network device. The session logic 824 may be further configured to transmit another announcing message to indicate a route type capability of the device 800 to the peer network device. The other announcing message may be transmitted prior to transmitting the update message to the peer network device.

In a number of embodiments, the storage 818 can include routing data 828. The routing data 828 may relate to the route type capability data exchanged between two network devices. The routing data 828 can include Network Layer Reachability Information (NLRI) such as, but not limited to, IP prefixes that BGP advertises. In further embodiments, the routing data 828 may include routing tables exchanged between the device 800 and various peer network devices. For example, the routing data 828 may include routing table of the device 800 and routing tables the device 800 has received from the peer network device.

In various embodiments, the storage 818 can include BGP data 830. The BGP data 830 may refer to messages and attributes that facilitate the exchange and management of routing information. The BGP data 830 can include, but is not limited to, BGP messages, NLRI, path attributes, routing policies, or the like.

In still more embodiments, the storage 818 can include peer data 832. The peer data 832 may relate to information associated with peering relationships established between BGP speakers. The peer data 832 can include the peer Internet Protocol (IP) addresses, Autonomous System (AS) numbers, BGP session parameters, such as, but not limited to, BGP version, hold time, routing policies, address families, and operational metrics.

Finally, in many embodiments, data may be processed into a format usable by a machine-learning ("ML") model 826 (e.g., feature vectors), and or other pre-processing techniques. The ML model 826 may be any type of ML model, such as supervised models, reinforcement models, and/or unsupervised models. The ML model 826 may include one or more of linear regression models, logistic regression models, decision trees, Naive Bayes models, neural networks, k-means cluster models, random forest models, and/or other types of ML models. The ML model 826 may be configured to analyze the routing data 828, the BGP data 830, and the peer data 832 to predict the route type capabilities of network devices.

Although a specific embodiment for a device 800 suitable for configuration with the session logic 824 suitable for carrying out the various steps, processes, methods, and operations described herein is discussed with respect to FIG. 8, any of a variety of systems and/or processes may be utilized in accordance with embodiments of the disclosure. For example, the device may be in a virtual environment such as a cloud-based network administration suite or a cloud computing environment, or it may be distributed across a variety of network devices such that each acts as a device and the session logic 824 acts in tandem between the devices. The elements depicted in FIG. 8 may also be interchangeable with other elements of FIGS. 1 - 7 as required to realize a particularly desired embodiment.

In summary, devices and methods are provided for exchanging route type capabilities between peer network devices, for example, Border Gateway Protocol (BGP) speakers, to prevent a BGP session reset when a particular route type is not supported by one of the peer network devices. A network device, that supports a set of route types, receives an announcing message indicating a route type capability of a peer network device. The network device selects a subset of route types supported by the peer network device from the set of route types based on the route type capability of the peer network device. The network device transmits an update message that advertises the subset of route types to the peer network device. Thus, a route type supported by the network device is not included in the update message if the route type is not advertised in the announcing message by the peer network device.

Although the present disclosure has been described in certain specific aspects, many additional modifications and variations would be apparent to those skilled in the art. In particular, any of the various processes described above can be performed in alternative sequences and/or in parallel (on the same or on different computing devices) to achieve similar results in a manner that is more appropriate to the requirements of a specific application. It is therefore to be understood that the present disclosure can be practiced other than specifically described without departing from the scope and spirit of the present disclosure. Thus, embodiments of the present disclosure should be considered in all respects as illustrative and not restrictive. It will be evident to the person skilled in the art to freely combine several or all of the embodiments discussed here as deemed suitable for a specific application of the disclosure. Throughout this disclosure, terms like "advantageous", "exemplary", or "example" indicate elements or dimensions which are particularly suitable (but not essential) to the disclosure or an embodiment thereof and may be modified wherever deemed suitable by the skilled person, except where expressly required. Accordingly, the scope of the disclosure should be determined not by the embodiments illustrated, but by the appended claims and their equivalents. Any reference to an element being made in the singular is not intended to mean "one and only one" unless explicitly so stated, but rather "one or more." All structural and functional equivalents to the elements of the above-described preferred embodiment and additional embodiments as regarded by those of ordinary skill in the art are hereby expressly incorporated by reference and are intended to be encompassed by the present claims. Moreover, no requirement exists for a system or method to address each and every problem sought to be resolved by the present disclosure, for solutions to such problems to be encompassed by the present claims. Furthermore, no element, component, or method step in the present disclosure is intended to be dedicated to the public regardless of whether the element, component, or method step is explicitly recited in the claims. Various changes and modifications in form, material, workpiece, and fabrication material detail can be made, without departing from the spirit and scope of the present disclosure, as set forth in the appended claims, as might be apparent to those of ordinary skill in the art, are also encompassed by the present disclosure.

## Claims

1. A network device, comprising:
means for receiving an announcing message configured to indicate a route type capability of a peer network device, wherein the network device supports a set of route types;
means for selecting, based on the route type capability of the peer network device, a subset of route types from the set of route types, wherein the subset of route types is supported by the peer network device; and
means for transmitting an update message configured to advertise the subset of route types to the peer network device.

2. The network device of claim 1, further comprising means for transmitting another announcing message configured to indicate a route type capability of the network device to the peer network device.

3. The network device of claim 2, further comprising means for transmitting the another announcing message prior to transmitting the update message.

4. The network device of any of claims 1 to 3, further comprising means for establishing a Border Gateway Protocol session between the network device and the peer network device based on the announcing message, optionally further comprising means for transmitting the update message during the Border Gateway Protocol session.

5. The network device of any of claims 1 to 4, wherein the route type capability indicates one or more route types supported by the peer network device.

6. The network device of any of claims 1 to 5, wherein the announcing message corresponds to a Border Gateway Protocol OPEN message, optionally wherein the Border Gateway Protocol OPEN message includes an optional parameters field that is configured to indicate the route type capability.

7. The network device of any of claims 1 to 6, wherein the update message corresponds to a Border Gateway Protocol UPDATE message, optionally wherein the Border Gateway Protocol UPDATE message includes a network layer reachability information field that is configured to advertise the subset of route types.

8. The network device of any of claims 1 to 7, wherein the route type capability is associated with at least one of an Address Family Indicator (AFI) or a Subsequent AFI (SAFI), optionally wherein the announcing message is further configured to indicate at least one of the AFI or the SAFI.

9. The network device of any of claims 1 to 8, wherein the route type capability is associated with a unique identifier code, optionally wherein the announcing message is further configured to indicate the unique identifier code.

10. A network device, comprising:
means for transmitting an announcing message configured to indicate a route type capability of the network device to a peer network device, wherein the peer network device supports a set of route types; and
means for receiving, in response to the announcing message, an update message from the peer network device, wherein:
the update message is configured to advertise a subset of route types selected from the set of route types based on the route type capability, and
the subset of route types is supported by the network device.

11. The network device of claim 10, wherein the session logic is further configured to receive another announcing message that indicates a route type capability of the peer network device.

12. The network device of claim 10 or 11, wherein the network device and the peer network device are acting as Border Gateway Protocol speakers.

13. The network device of any of claims 10 to 12, wherein the session logic is further configured to determine an update in the route type capability, optionally wherein the session logic is further configured to transmit a new announcing message configured to indicate the updated route type capability to the peer network device.

14. A method, comprising:
receiving an announcing message configured to indicate a route type capability of a peer network device, wherein a network device supports a set of route types;
selecting, based on the route type capability of the peer network device, a subset of route types from the set of route types, wherein the subset of route types is supported by the peer network device; and
transmitting an update message configured to advertise the subset of route types to the peer network device,
the method optionally further comprising the steps implemented by the network device of any of claims 2 to 9.

15. A method comprising:
transmitting an announcing message configured to indicate a route type capability of a network device to a peer network device, wherein the peer network device supports a set of route types; and
receiving, in response to the announcing message, an update message from the peer network device, wherein:
the update message is configured to advertise a subset of route types selected from the set of route types based on the route type capability, and
the subset of route types is supported by the network device,
the method optionally further comprising the steps implemented by the network device of any of claims 11 to 13.

16. A computer program, computer program product or computer readable medium comprising instructions which, when executed by a computer, cause the computer to carry out the steps of the method of claim 14 or 15.
